# EUROPEAN PATENT SPECIFICATION

(11) **EP 1 488 922 B1**
(45) Date of publication and mention of the grant of the patent: **26.10.2016**
(21) Application number: 03708612.1
(22) Date of filing: 14.03.2003
(51) Int. Cl.: B32B 27/00

(54) **FLEXIBLE CONTAINER, METHOD OF FORMING A FLEXIBLE CONTAINER AND METHOD OF ENCLOSING A LIQUID IN A FLEXIBLE CONTAINER**
FLEXIBLER BEHÄLTER, VERFAHREN ZU DESSEN HERSTELLUNG SOWIE VERFAHREN ZUM EINSCHLIESSEN EINER FLÜSSIGKEIT IN EINEM FLEXIBLEN BEHÄLTER
RECIPIENT SOUPLE, PROCEDE DE FABRICATION D'UN RECIPIENT SOUPLE ET PROCEDE PERMETTANT D'ENFERMER DU LIQUIDE DANS UN RECIPIENT SOUPLE

(30) Priority: 26.03.2002 JP 2002086476
(43) Date of publication of application: 22.12.2004
(73) Proprietor: Kurita Water Industries Ltd., Tokyo 164-0001 (JP)
(72) Inventor: NOZUE, Mitsuru, Tokyo, 164-0001 (JP); YAMAMOTO, Akikazu, Tokyo 164-0001 (JP); NAKANO, Yoshimasa, Tokyo 164-0001 (JP); KUROSU, Tadaaki, Tokyo 164-0001 (JP)
(74) Representative: Addiss, John William
(86) International application number: PCT/JP2003/003075
(87) International publication number: WO 2003/080331

(56) References cited:
- EP-A1- 0 465 681
- EP-A1- 1 029 896
- EP-A1- 1 179 416
- WO-A1-00/13896
- JP-A- 2 242 746
- JP-A- 4 179 544
- JP-A- 5 050 565
- JP-A- 10 139 074
- JP-A- 61 125 844
- JP-A- 2001 315 281
- JP-U- 3 081 734
- JP-U- 4 020 435
- JP-U- 4 047 531
- JP-U- 55 170 249
- JP-U- 56 010 032
- US-A- 4 228 215
- US-A- 5 308 668

## Description

### TECHNICAL FIELD

The present invention relates to a packing material, container, and so forth, for use in commercialization, transportation, storage, and so forth, of a liquid such as a drinking water, pure water, and so forth, and in particular, to a packing material using a flexible material that can be torn to break seal, a flexible container, a method of forming the flexible container, a method of enclosing a liquid in the flexible container, and the liquid enclosed in the flexible container.

### BACKGROUND ART

Generally, a plastic container called a PET bottle is heavily used for commercialization, transportation, storage, and so forth, of a drinking water such as a mineral water, and other liquids. The plastic container includes "a drinking water container for use in an emergency" as disclosed in, for example, JP - A 8 - 198231. It is pointed out, however, that this kind of plastic container is light in weight and high in safety, but is bulky and hard to handle because it is high in rigidity and keeps in a fixed shape regardless of an amount of the contents. As opposed to such a container, a flexible container in bag shape, formed of a plastic film, has been in widespread use. The flexible container is high in holding efficiency in a box or like because it undergoes variation in external shape due to fluidity of its contents, and the flexible container by itself after use is easy to handle because it is small in volume and can be optionally folded and overlaid one on top of another, thereby rendering it less bulky than the PET bottle.

As an example where a laminated film was used in the past as a packing material, there can be cited, for example, "a drinking water packing bag for long term storage and a method of manufacturing the same", disclosed in JP - 10 139074 A, "processed foodstuff in liquid state", disclosed in JP - 2000 14374 A, and so forth. In JP - 10 139074 A, an antibacterial layer is formed on the surface of a base member made up of a laminate of a polyethylene film and a nylon film. Further, in JP - 2000 14374 A, there is disclosed a case of packaging by use of a laminate of a plurality of layers of plastic films, providing processed foodstuff in liquid state, excellent in durability without causing deterioration and loss of fragrant constituents by rapidly absorbing oxygen gas in the foodstuff in liquid state and a head space thereof, thereby enabling long term storage.

It is pointed out, however, that a flexible container for use in commercialization, transportation, storage, and so forth, of a liquid and so forth has problems to be resolved as follows.

Firstly, in order to commercialize, transport, and store the contents such as a liquid, and so forth, using a flexible container, it is essential for the constituent material of the flexible container to give out no offensive odor at all. Removal of odor is required of a packing material itself, particularly, in the case of a commodity, such as a liquid and so forth, which quality is determined by absence of flavor and odor, and which quality is impaired by adhesion of an odor. A plurality of the flexible containers can be transported by use of a corrugated fiberboard box, and so forth, as a transportation container, however, there was a risk that if the corrugated fiberboard box, and so forth come into contact with another transportation container and other articles, in transit and during storage, odors of the corrugated fiberboard box, and so forth make ingress into the contents of the flexible container, such as a liquid state and so forth, and adhere thereto. Accordingly, there is a risk that in the case of the contents of the flexible container, such as a liquid and so forth, of which absence of favor and odor is essential, for example, an odor adhered thereto confuses a user into thinking that it has acquired a flavor, thereby impairing commercial value thereof.

Secondly, a liquid commercialized by use of the flexible container is distributed by trucks, and even with the use of the corrugated fiberboard box, and so forth, as the transportation container, there is a risk of occurrence of leakage of the contents of the flexible container such as a leakage of a liquid, and so forth if the flexible container is damaged when subjected to impact and pressure due to vibration, fall, and so on, in transit and during distribution.

Thirdly, it is necessary to enhance strength of the flexible container in order to prevent the contents from flowing out of the flexible container due to damage occurring thereto, however, if such reinforcement hinders tearableness of the flexible container, there arises then a risk that openability thereof, which is an advantage thereof, is impaired.

And, fourthly, the flexible container is convenient for waste disposal, however, if it is made of material containing environmentally hazardous substances and chlorine, it can cause environmental pollution due to flowing out of the environmentally hazardous substances after disposal, evolution of dioxin upon incineration, and so forth.

### DISCLOSURE OF INVENTION

According to a first aspect of the invention there is provided a flexible container formed of a flexible material made up of a laminated film having tearableness, the flexible container comprising:
a holding part for holding a liquid, formed of the flexible material being the laminate or including the laminate, the laminate comprising; a heat seal layer having heat seal property, provided on the inner side of the laminate; a protective layer having a mechanical strength, provided on the outer side of the laminate; and a gas shut-out layer having gas shut-out property, provided between the heat seal layer and the protective layer;
seal parts each bonding and sealing the heat seal layer of the flexible material by a necessary seal width to seal the holding part, the necessary seal width being set for obtaining a sufficient seal force; and
tear parts formed in one of the seal parts;
wherein the flexible material is made up of a single laminated film comprising: the heat seal layer of polyethylene; the gas shut-out layer of ethylene-vinyl alcohol resin; and the protective layer of nylon or polyethylene terephthalate, and
wherein the seal parts include a center seal part for sealing the holding part at a center side of the holding part, a top seal part for sealing the holding part at a top side of the holding part, and a bottom seal part for sealing the holding part at a bottom side of the holding part,
the bottom seal part seals the holding part sealed by the center seal part and the top seal part, the holding part holding the liquid.

According to a second aspect of the invention there is provided a method of forming a flexible container formed of a flexible material made up of a laminated film having tearableness, the method comprising the steps of:
forming a plurality of seal parts by bonding portions of the flexible material being the laminated film or including the laminated film, the laminate film comprising a heat seal layer having heat seal property, provided on the inner side of the laminate film, a protective layer having a mechanical strength, provided on the outer side of the laminate film, and a gas shut-out layer having gas shut-out property, provided between the heat seal layer and the protective layer; and
forming a holding part for holding the contents including a liquid, enclosed by the seal parts,
wherein the laminated film comprises the heat seal layer of polyethylene, the gas shut-out layer of ethylene-vinyl alcohol resin, and the protective layer of nylon or polyethylene terephthalate;
wherein the steps of forming the plurality of the seal parts and forming the holding part include the steps of forming a center seal part for sealing the holding part at a center side of the holding part, forming a top seal part for sealing the holding part at a top side of the holding part, and forming a bottom seal part for sealing the holding part at a bottom side of the holding part sealed by the center seal part and the top seal part, the holding part holding the liquid.

According to a third aspect of the invention there is provided a method of enclosing a liquid in a flexible container formed of a flexible material made up of a laminated film having tearableness, the method comprising the treatment steps of:
forming a plurality of seal parts by bonding portions of the flexible material being a laminated film or including the laminated film, the laminated film comprising a heat seal layer having heat seal property, provided on the inner side of the laminate film, a protective layer having a mechanical strength, provided on the outer side of the laminate film, and a gas shut-out layer having gas shut-out property, provided between the heat seal layer and the protective layer;
forming a holding part after leaving out an opening in a part of the seal parts;
charging a predetermined amount of the liquid into the holding part; and
sealing the opening of the holding part after charging the liquid;
wherein the laminated film comprises the heat seal layer of polyethylene, the gas shut-out layer of ethylene-vinyl alcohol resin, and the protective layer of nylon or polyethylene terephthalate, and
wherein the treatment steps of forming the plurality of the seal parts, and forming the holding part include the treatment steps of forming a center seal part for sealing the holding part at a center side of the holding part, forming a top seal part for sealing the holding part at a top side of the holding part, and forming a bottom seal part for sealing the holding part at a bottom side of the holding part sealed by the center seal part and the top seal part, the holding part holding the liquid.

With such a configuration as described, while sealing can be effected by heat-sealing of the heat seal layer having heat seal property, an odor can be blocked from make ingress into the flexible container by the gas shut-out layer having gas shut-out property., and the contents of the flexible container can be protected against damage due to perforation, and so forth, by the protective layer.

Further, with the use of the flexible container described, while the flexible material can be rendered odorless, ingress of an odor can be blocked, so that it is possible to prevent deterioration in quality of a liquid as the contents of the flexible container, due to the odor.

Thus, the packing material, the flexible container, the method of forming the flexible container, the method of enclosing a liquid in the flexible container, and the liquid, according to the invention, have the following advantageous effects:
(a) It becomes possible to provide a packing material capable of causing the contents to acquire no lingering odor, suppressing emission of an odor from the contents, preventing deterioration of the contents, due to an odor, and breaking seal with ease by tearing, excellent in mechanical strength and environmental conservation, and available at a low cost. Further, the packing can enclose a liquid such as water, and so forth, which can be thereby commercialized, transported and stored with ease.
(b) It is possible to provide the flexible container capable of causing the contents to acquire no lingering odor, suppressing emission of an odor from the contents, preventing deterioration of the contents, due to an odor, and breaking seal with ease by tearing, excellent in mechanical strength and environmental conservation, and available at a low cost.
(c) It is possible to commercialize a high quality liquid to thereby provide a highly reliable liquid since the liquid as the contents of the flexible container acquires no lingering odor, and deterioration in quality of the liquid, due to an odor from environments, can be prevented.

The above and other objects, configurations and advantages of the invention will become more apparent from the following detailed description of the preferred embodiments with reference to the accompanying drawings.

### BRIEF DESCRIPTION OF DRAWINGS

Fig. 1 is a partially cutaway perspective view of a flexible material as a first embodiment of a packing material according to the invention;
Fig. 2 is an enlarged sectional view taken on line II - II of Fig. 1;
Fig. 3 is a perspective view showing lamination treatment of the flexible material, as a first embodiment of a method of forming a flexible container according to the invention;
Fig. 4 is an enlarged sectional view showing the configuration of another flexible material;
Fig. 5 is a perspective view showing a seal treatment applied to a center seal part of the flexible material;
Fig. 6 is a plan view showing a flexible container;
Fig. 7 is a plan view showing the flexible container with water enclosed therein;
Fig. 8 is an enlarged sectional view showing the configuration of a flexible material as a second embodiment of a packing material according to the invention;
Fig. 9 is an enlarged sectional view showing the configuration of a flexible material as a third embodiment of a packing material according to the invention; and
Fig. 10 is a plan view showing another flexible container before water is enclosed therein;

### BEST MODE FOR CARRYING OUT THE INVENTION

### First Embodiment

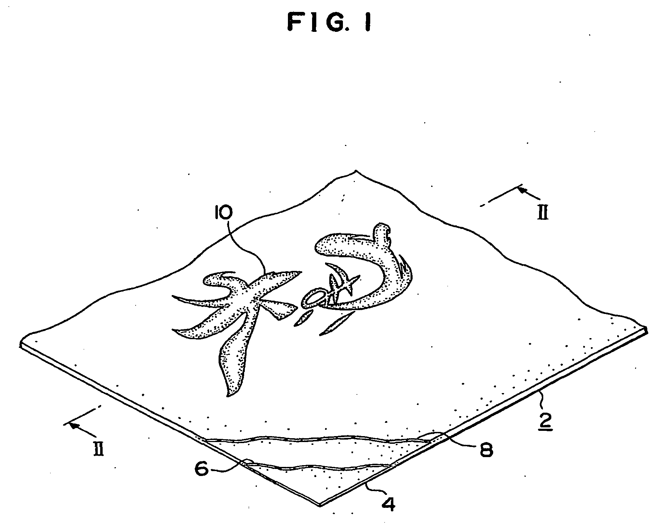

A first embodiment of a packing material according to the invention is for use in a flexible container, and so forth, for holding water, and so forth, which is the contents of the flexible container, and for the packing material, use is made of, for example, a flexible material 2 shown in Fig. 1. The flexible material 2 is a laminated film made up of a plurality of layers, and in the case of the present embodiment, the flexible material 2 is a laminate comprising a heat seal layer 4 as a base member having heat seal property, a gas shut-out layer 6 having gas shut-out property, capable of shutting out odor or the like, emitted from directions of both the top face and rear face thereof, and a protective layer 8 having suitable mechanical strength, capable of blocking leakage and so forth, of the contents. The laminate making up the flexible material 2 is formed by a dry laminating process of applying heat, pressure, and so forth to the heat seal layer 4 and the gas shut-out layer 6 with an adhesive (not shown) or adhesive resin (not shown) sandwiched therebetween and to the gas shut-out layer 6 and the protective layer 8 with the adhesive or adhesive resin sandwiched therebetween, thereby bonding those layers together.

For the heat seal layer 4, use is made of, for example, polyethylene (PE) or other resins having heat seal property, and for the gas shut-out layer 6, use is made of, for example, ethylene-vinylalcohol resin (EVOH), aluminum oxide coated crystalline polyethylene terephthalate (CPET) obtained by coating polyethylene terephthalate with an aluminum oxide, or other resins having gas shut-out property while for the protective layer 8, use is made of, for example, nylon (NY), polyethylene terephthalate (PET), or other resins having a high mechanical strength.

Accordingly, for use .as the flexible material 2, there can be formed a laminate composed of, for example, "NY #25 / EVOH #12 / PE #45", "PET #12 / CPET #12 / PE #45", "NY #15 / CPET #12 / PE #45", and so forth, respectively, through selection from those resins described above. More specifically, a flexible material "NY #25 / EVOH #12 / PE #45" is a laminate made up of a nylon (NY) layer 25 µm thick, an ethylene-vinylalcohol resin (EVOH) layer 12 µm thick, and a polyethylene (PE) layer 45 µm thick, a flexible material "PET #12 / CPET #12 / PE #45" is a laminate made up of a polyethylene terephthalate (PET) layer 12 µm thick, an aluminum oxide coated crystalline polyethylene terephthalate (CPET) layer 12 µm thick, and a polyethylene (PE) layer 45 µm thick, and further, a flexible material "NY #15 / CPET #12 / PE #45" is a laminate made up of a nylon (NY) layer 15 µm thick, an aluminum oxide coated crystalline polyethylene terephthalate (CPET) layer 12 µm thick, and a polyethylene (PE) layer 45 µm thick.

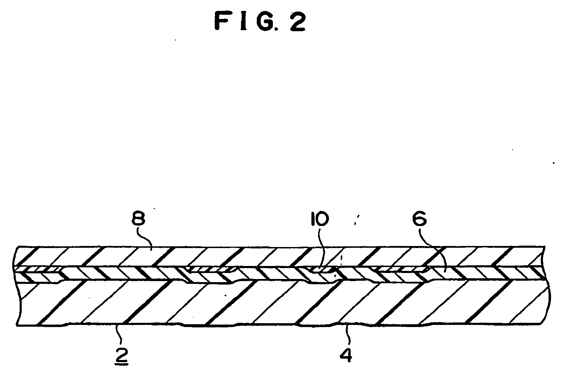

As shown in Fig. 2, the flexible material 2 has a sandwiching structure in which the gas shut-out layer 6 is sandwiched between the protective layer 8 and the heat seal layer 4, provided in the surface layer thereof, and a printing face is set on the inner face side of the protective layer 8, providing a display 10 for the contents. With the present embodiment, an identification display for water, describing "tasty water",. is shown. Thus, by providing the display 10 on the inner face side of the protective layer 8, the display 10 can be protected by the protective layer 8, and at the same time, the function of the display 10 is not impaired if a transparent material is used for the protective layer 8.

The flexible material 2, having a three-layer structure, is provided with heat seal property, gas shut-out property, and wear resistance as well as tearableness, and odorless property. In this connection, the heat seal property refers to a property capable of effecting sealing by mutual bonding and heating of the heat seal layer 4 side of the flexible material 2, and the gas shut-out property refers to a property capable of preventing lingering odor from being transferred to the contents by shutting out an odorous gas, and also shutting out odor emitted from the contents. Further, the tearableness refers to a property that when, for example, a slit is opened in a flexible material, sealing can be broken by easily tearing the flexible material starting from the slit, and the odorless property refers to a property that the heat seal layer 4 or the flexible material does not emit an odor.

Further, if a film of pure polyethylene (PE) is used for the heat seal layer 4 as the base member, even when water and so forth, as the contents of a package, come into contact with the polyethylene (PE), this will not cause the water, and so forth, to acquire odor of plastics, and so forth, to thereby render the water, and so forth, odorless, and to prevent deterioration in quality, due to the odor, while easily effecting sealing between portions of the heat seal layer 4 by bringing the portions of the heat seal layer 4 into intimate contact with each other and by heating from the side of the protective layer 8, thereby obtaining a sealing condition sufficient to be able to shut out the water, and so forth. Incidentally, the film of polyethylene (PE), for use as the base member, has an advantage of high heat seal property, however, the sealing performance thereof has a close relationship with thickness of the film, and it has been confirmed by experiments that the film with thickness of 45 µm has a high sealing performance as compared with a case of-the film with thickness of 60 µm.

Further, the ethylene-vinylalcohol resin (EVOH) has high gas barrier property, however, the gas barrier property has a close relationship with film thickness, and it has been confirmed by experiments that, in the case of the film thickness being 12 µm, the gas barrier property deteriorates as compared with a case of the film thickness being 25 µm, however, this will cause no practical problem.

Further, if for the gas shut-out layer 6, use is made of, for example, the ethylene-vinylalcohol resin (EVOH), or the aluminum oxide coated crystalline polyethylene terephthalate (CPET), an external odorous gas making ingress from the side of the protective layer 8 can be shut out, so that such an odor will not reach the heat seal layer 4, thereby preventing the water, and so forth, that is, the contents of the package, from being polluted with the odor.

Furthermore, by use of nylon (NY) and polyethylene terephthalate (PET) in the protective layer 8, the mechanical strength of the protective layer 8 can be enhanced, thereby preventing the heat seal layer 4 as the base member and the gas shut-out layer 6 from being perforated with certainty. In the case of using nylon (NY) in the protective layer 8, if the nylon is wetted with water, hydrolysis and water absorption occur, thereby generating caprolactam, so that moisture absorbed sometimes reaches the gas shut-out layer 6.

In the case of using the ethylene-vinylalcohol resin (EVOH) in the gas shut-out layer 6, if the ethylene-vinylalcohol resin (EVOH) is wetted with water, it is pointed out that the barrier property of the gas shut-out layer 6 deteriorates. Accordingly, if polyethylene terephthalate (PET) is used in the protective layer 8 in a humid environment where dew condensation occurs to a product such as, for example, in the course of filling the product with water in summertime, this will cause no inconvenience as encountered in the case of using nylon (NY). However, in an environment not in a humid state, use of nylon in the protective layer 8 need not be denied because there do not occur problems such as hydrolysis and water absorption.

Then, if resins such as pure nylon, polyethylene terephthalate, ethylene-vinylalcohol resin, and so forth are used, since these do not contain environmentally hazardous substances and chlorine, there do not occur flowing out of the environmentally hazardous substances, and evolution of dioxin upon incineration, so that environmental pollution will not result.

Subsequently, there will be described hereinafter a flexible container using the flexible material as the packing material according to the invention, a method of forming the flexible container, a method of enclosing a liquid in the flexible container, and the liquid enclosed therein.

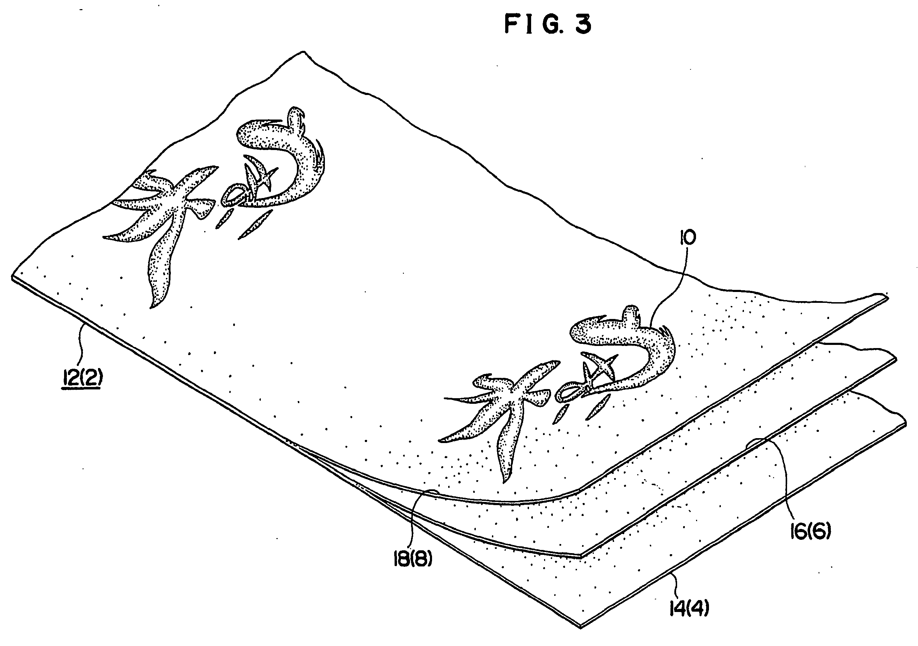

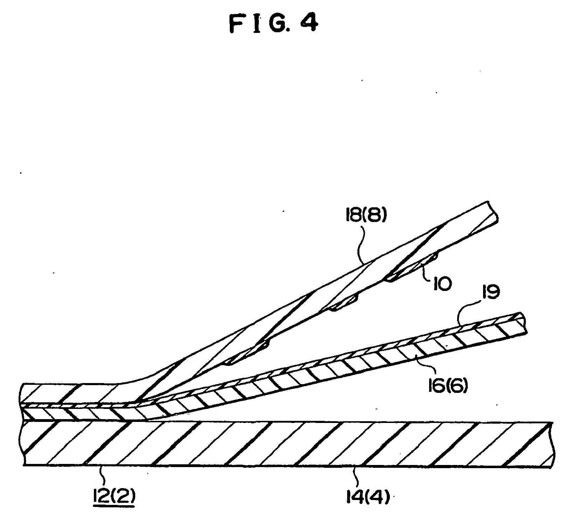

A laminate as the flexible material 2 that is the packing material, that is, for example, a laminated film 12 shown in Figs. 3 and 4 is a single film composed of a polyethylene (PE) film 14 serving as the heat seal layer 4 as the base member, an aluminum oxide coated crystalline polyethylene terephthalate (CPET) film 16 serving as the gas shut-out layer 6, and a nylon (NY) film 18 serving as the protective layer 8. With the CPET film 16, an aluminum oxide layer 19 as a reinforcing layer for shutting out gas is formed in a surface layer thereof by coating. The aluminum oxide layer 19 is formed by applying a coating treatment to the top of the CPET film before making up the laminated film 12. Further, on the rear face side of the NY film 18, a predetermined display 10 is formed by printing.

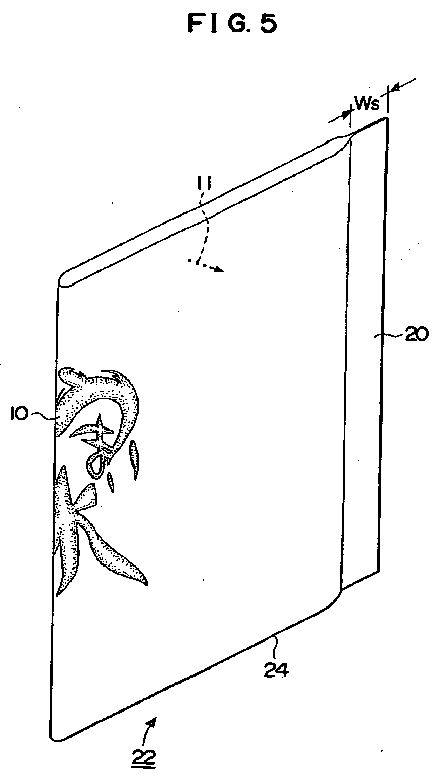

The laminated film 12 is formed in band-like shape with a predetermined width, and, for example, as shown in Fig. 5, a seal treatment is applied to a center seal part 20 by heating, thereby forming a holding part 24 of a flexible container 22 with a singe piece of the laminated film 12. In this case, because the holding part 24 is formed with the PE film 14 disposed on the inner side, the center seal part 20, on the PE film 14 side, is bonded together, and a heat treatment is applied thereto in as pressed-into-contact state inside a press-contact mould (not shown), thereby executing the seal treatment with ease. In that case, a press-bond treatment can be applied with ease by thermal compression bonding using a seal treatment machine (not shown), and with the press-bond treatment, a treatment with a high precision can be executed depending on temperature, pressure applied, and time. A seal width Ws necessary to obtain a sufficient seal force is set at the center seal part 20. In the flexible container 22, the display 10 is the identification display indicating the contents of the flexible container 22, and a display 11 is a direction display indicating a tear direction.

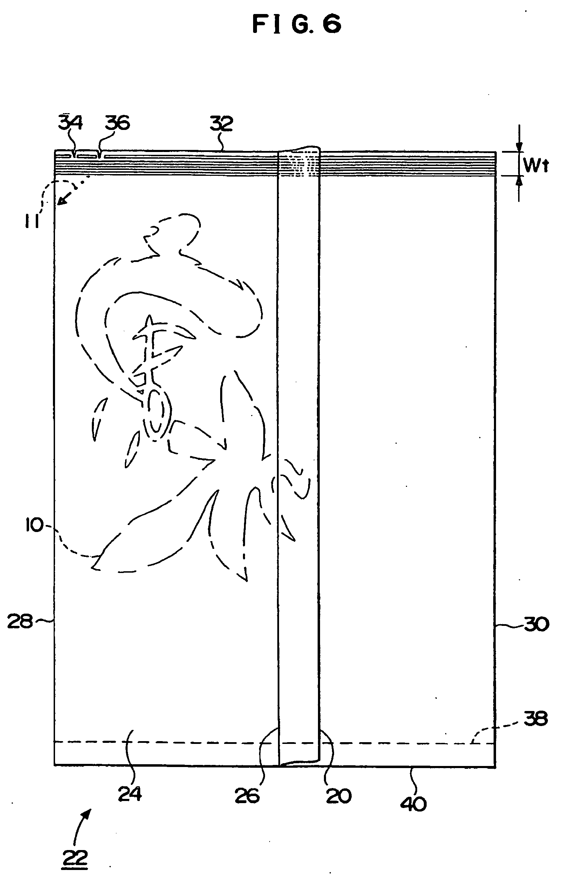

As shown in Fig. 6, with the holding part 24, while ridgelines 28, 30 are formed by setting an edge 26 of the center seal part 20 at the center of the holding part 24, the center seal part 20 is bent in one direction so as to be overlaid on the holding part 24, and a top seal part 32 is formed on the upper side of the holding part 24, thereby applying a sealing treatment thereto. In this case, as with the center seal part 20, while the top seal part 32, on the PE film 14 side, is bonded together, a heat treatment is applied thereto in as pressed-into-contact state inside the press-contact mould, thereby forming the top seal part 32 by applying a heat treatment as with the case of the center seal part 20. Further, a seal width Wt necessary to obtain a sufficient seal force is set at the top seal part 32.

Further, slits 34, 36 serving as tear parts, respectively, are formed on one corner side of the top seal part 32 to indicate seal-breaking spots corresponding to the display 11, and also to break seal with ease.

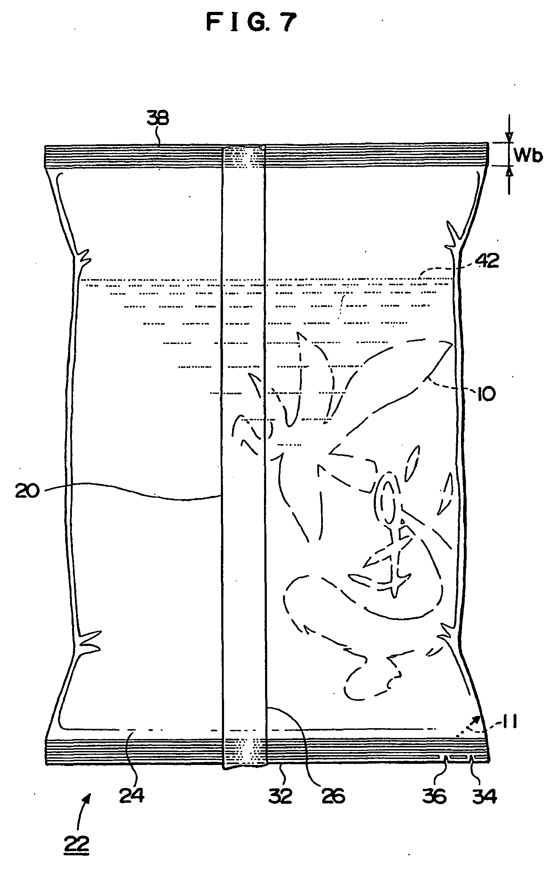

Thus, the holding part 24 sealed at two spots, that is, the center seal part 20 and the top seal part 32 makes up the flexible container 22 with an opening due to lack of a bottom seal part 38 that is yet to be formed. Subsequently, with an opening 40 side of the flexible container 22, facing upward, a predetermined amount of water 42 is charged into the holding part 24 as shown in Fig. 7 by water-charging means (not shown) while drawing off gas from the holding part 24, and as with the top seal part 32, the bottom seal part 38 is sealed by overlaying the center seal part 20, thereby completing a process of enclosing a liquid and sealing the holding part 24. In this case, a seal width Wb necessary to obtain such a sufficient seal force as in the case of the top seal part 32 is set at the bottom seal part 38.

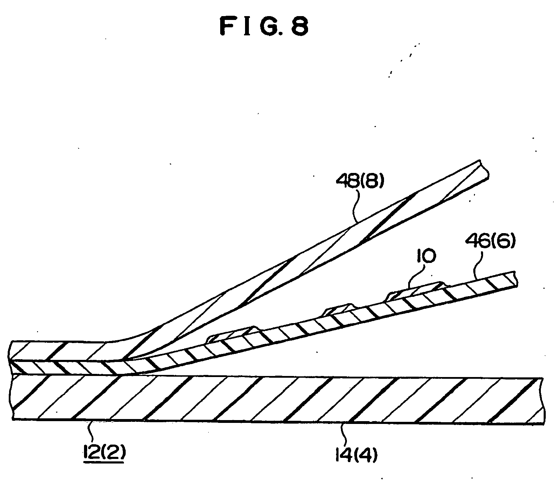

With reference to a second embodiment of the invention, the laminated film 12 can be similarly made up by use of, for example, the PE film 14 for the heat seal layer 4, an ethylene-vinylalcohol resin (EVOH) film 46 for the gas shut-out layer 6, and a polyethylene terephthalate (PET) film 48 for the protective layer 8 as shown in Fig. 8, and by-bonding respective materials with each other, using the dry laminating process, and so forth, with an adhesive (nor shown) interposed therebetween,. In such a case, the display 10 may be formed on the top face side of the gas shut-out layer 6.

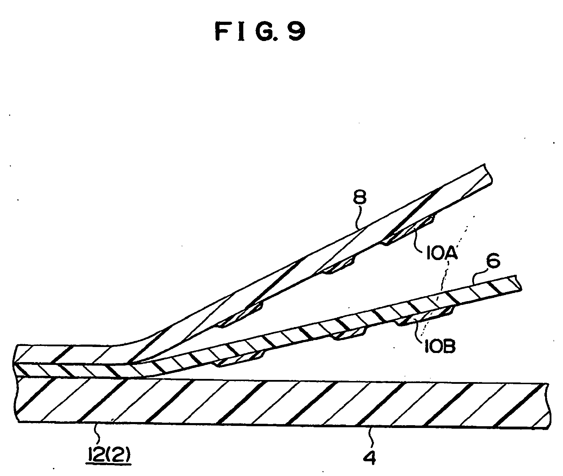

With reference to a third embodiment, as shown in Fig. 9, there may be formed a first display 10A on the rear face side of the protective layer 8, and a second display 10B on the rear face side of the gas shut-out layer 6, so that both the displays may be shown in superimposition of one upon the other, thereby enhancing a display effect by means of superimposed display.

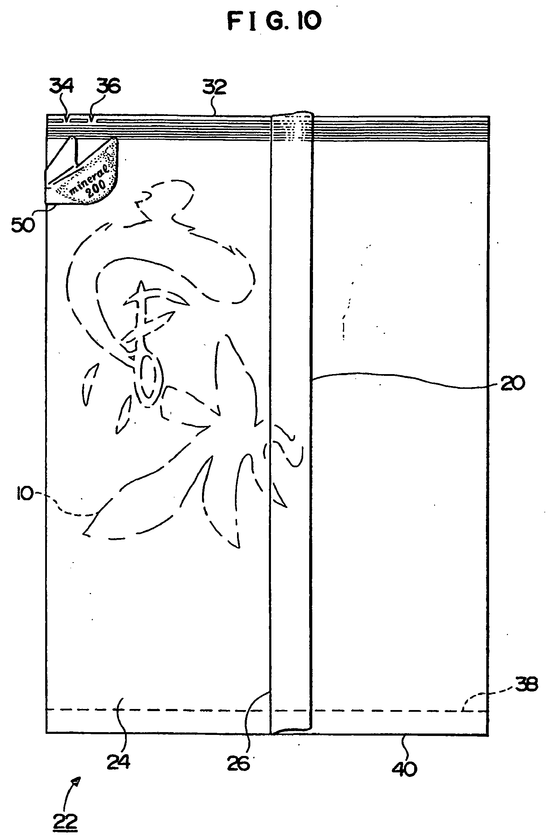

Still further, as shown in Fig. 10, in the vicinity of the slits 34, 36 of the top seal part 32, a seal-breaking guide 50 for giving a guidance for a direction of tearing from the slits 34, 36, and also for reinforcing an opening formed by breaking seal may be formed of a synthetic resin film.

### Embodiments

Next, with reference to specific working examples, strength, lingering odor, and cuttable property are described hereinafter.

### Working Example 1

A flexible container 22 as shown in Fig. 6 was formed with an NY #25 / EVOH #12 / PE #45 film made up of an NY film 25 µm thick, an EVOH film 12 µm thick, and a PE film 45 µm thick and after charging a mineral water as a flavorless and odorless water 42 into a holding part 24 of the flexible container 22, the flexible container 22 was sealed at a bottom seal part 38 thereof to be thereby rendered into such a form as shown in Fig. 7.

### Working Example 2

A flexible container 22 as shown in Fig. 6 was formed with a PET #12 / CPET #12 / PE #45 film made up of a PET film 12 µm thick, a CPET film 12 µm thick and a PE film 45 µm thick, and after charging a mineral water as a flavorless and odorless water 42 into a holding part 24 of the flexible container 22, the flexible container 22 was sealed at a bottom seal part 38 thereof to be thereby rendered into such a form as shown in Fig. 7.

### Working Example 3

A flexible container 22 as shown in Fig. 6 was formed with an NY #15 / CPET #12 / PE #45 film is a laminate made up of an NY film 15 µm thick, a CPET film 12 µm thick, and a PE film 45 µm thick and after charging a mineral water as a flavorless and odorless water 42 into a holding part 24 of the flexible container 22, the flexible container 22 was sealed at a bottom seal part 38 thereof to be thereby rendered into such a form as shown in Fig. 7.

### Working Example 4

A flexible container 22 as shown in Fig. 6 was formed with an NY #25 / CPET #12 / PE #45 film is a laminate made up of an NY film 25 µm thick, a CPET film 12 µm thick, and a PE film 45 µm thick, and after charging a mineral water as a flavorless and odorless water 42 into a holding part 24 of the flexible container 22, the flexible container 22 was sealed at a bottom seal part 38 thereof to be thereby rendered into such a form as shown in Fig. 7.

With reference to not less than two of Working Examples 1 to 4, performance comparison was carried out from the viewpoint of commercialization of liquid, quality maintenance, transportability, and storability.

### (1) strength test 1

At the strength test 1, checking was made on whether or not water leakage occurs when the flexible container 22 in pack condition, that is, bare condition is dropped from a height of 1 meter on a concrete floor 5 times (drop test 1), whether or not water leakage occurs when the flexible containers 22 housed in a corrugated fiberboard case are dropped from a height of 1 meter on a concrete floor 5 times (drop test 2), whether or not the flexible container 22 in bare condition can withstand a load of 60 kg for 1 minute (pressure test), and whether or not damage occurs when the flexible containers 22 housed in a corrugated fiberboard case are transported between Shinjyuku and Yaizu 5 times both ways (transportation test). Results of the tests are shown in Table 1.

**Table 1**

| | container dropped | case dropped | Transportation |
|---|---|---|---|
| Example 1 (NY #25 / EVOH #12 / PE #45) | O. K. | O. K. | O. K. |
| Example 2 (PET #12 / CPET #12 / PE #45) | Reject | Reject | Reject |
| Example 3 (NY #15 / CPET #12 / PE #45) | Reject | Reject | - |

As is evident from the results of the tests as above, the NY #25 / EVOH #12 / PE #45 film was found acceptable in all the tests for the container dropped, the case dropped, and the transportation, and suitable for commercialization, transportation, and storage of the water 42. Further, it was confirmed that in the case of using an NY film for the constituent material of the surface of the flexible container, penetration resistance was found high, thereby providing excellent protection function.

### (2) strength test 2

At the strength test 2, checking was made on whether or not water leakage occurs when the flexible container 22 in pack condition, that is, bare condition is dropped from a height of 50 cm meter on a concrete floor 2 times (drop test 1), whether or not water leakage occurs when the flexible containers 22 housed in a corrugated fiberboard case are dropped from a height of 50 cm on a concrete floor 5 times (drop test 2), whether or not the flexible container 22 in bare condition can withstand a load of 60 kg for 1 minute (pressure test), and whether or not damage occurs when the flexible containers 22 housed in a corrugated fiberboard case are transported between Shinjyuku and Yaizu 5 times both ways (transportation test). Results of the tests are shown in Table 2.

**Table 2**

| | container dropped | case dropped | transportation |
|---|---|---|---|
| Example 1 (NY #25 / EVOH #12 / PE #45) | O. K. | O. K. | O. K. |
| Example 2 (PET #12 / CPET #12 / PE #45) | O. K. | O. K. | Reject |

As is evident from the results of the strength test 2, the film according to Example 1 was found acceptable in all the tests while the film according to Example 2 was found rejected only in respect of transportation, but it can be said that even Example 2 has no practical problem unless excessive transportation is involved.

### (2) lingering odor test

At the lingering odor test, checking was made on whether or not the odors of films were sensed at a time of fabricating the flexible container 22, that is, if the films were odorless (sensory test 1), whether or not the water 42 in the flexible containers 22 acquired a lingering odor after a corrugated fiberboard as a constituent material of a corrugated fiberboard box is wetted, and the flexible containers 22 together with the corrugated fiberboard as wetted are wrapped up to be thereby stored in a constant temperature cell at 35°C for 2 weeks (sensory test 2). In this case, whether or not there was a load due to dropping was checked. Results of the tests are shown in Table 3.

**Table 3**

| | load due to dropping | no load due to dropping |
|---|---|---|
| Example 1 (NY #25 / EVOH #12 / PE #45) | NG | NG |
| Example 2 (PET #12 / CPET #12 / PE #45) | E | E |
| Example 3 (NY #15 / CPET #12 / PE #45) | E | E |

As is evident from the lingering odor tests, with the film according to Example 1, a lingering odor occurred to the water 42 in the flexible containers 22, but with Examples 2 and 3, no lingering odor occurred thereto., and the quality of the water 42, at the time of charging, was maintained, obtaining excellent results in terms of the taste of the water 42 in both cases. Symbol "E" indicate the highest ranking.

Further, at the lingering odor tests, assuming that a normal usage form is storage in the refrigerator, the flexible containers 22 together with fish, meat, fermented soybeans, garlic, and so forth were concurrently stored, and whether or not the water 42 in the flexible container 22 acquired a lingering odor was checked. With the film according to Examples 2 and 3, respectively, there was found no change in terms of the taste, and excellent results were obtained.

### (2) cuttable property test

At the cuttable property test, checking was made on the degree of difficulty upon breaking the seal using the slit 36 formed in the flexible container 22. In this case, 6 inspectors each evaluated on a maximum 3 points, and a grade was determined on the basis of the total of those points. Results of the tests are shown in Table 4.

**Table 4**

| | cuttable property | evaluation |
|---|---|---|
| Example 1 (NY #25 / EVOH #12 / PE #45) | 8 points | tenacious feeling |
| Example 2 (PET #12 / CPET #12 / PE #45) | 18 points | cuttable at will |
| Example 3 (NY #15 / CPET #12 / PE #45 | 17 points | Ditto |
| Example 4 (NY #25 / CPET #12 / PE #45 | 14 points | Hard |

As is evident from the results of the tests, the film according to Examples 2 and 3, respectively, had the best results, however, with the film according to Example 4, there is mo practical problem.

Further, with the embodiments described in the foregoing, the laminated film 12 is cited as an example of the flexible material 2, however, it is to be pointed that the invention assumes a case where other flexible material and so forth are laminated to a laminated film and includes a packing material using a flexible material partly incorporating the laminated film, a flexible container using the flexible material, a method of forming the flexible container, a method of sealing a liquid into the flexible container, and the liquid sealed in the flexible container.

Still further, with the embodiments described, there is cited by way of example the dry lamination process whereby, for bonding the heat seal layer 4 to the gas shut-out layer 6, and the gas shut-out layer 6 to the protective layer 8, the heat seal layer 4, the gas shut-out layer 6, and so forth, on the base member side, are coated with, for example, an adhesive dissolved in a solvent, and after evaporating the solvent, those layers are laminated together by applying pressure with a heating roll, however, for bonding of those materials, use may be made of a non-sol lamination process whereby the base member sides of those materials, respectively, are coated with an adhesive (for example, a polyurethane base adhesive) after heated, without use of a solvent, and are thereby laminated together, or an extrusion lamination process whereby an anchor coat is applied to the base member sides, and a melt resin is extruded between those materials to be laminated by use an extruder to be thereby laminated together by applying pressure with a cooling roll. Thus, the packing material, the flexible container using the flexible material, the method of forming the flexible container, the method of sealing a liquid into the flexible container, and the liquid sealed in the flexible container, according to the invention, are not limited to those using the dry lamination process.

Yet further, with the embodiment described, there is described the water 42 as the contents of the flexible container by way of example, however, it is to be understood that the invention is not limited thereto, but the contents of the flexible container, according to the invention, include a drinking water, mineral water, fruit juice, vegetable juice, various kinds of liquids such as pure water, and so forth, for industrial and medical use, foodstuff such as mayonnaise, and so forth, flowing substance or solid such as ice and so forth, a mixture of those described, and so forth.

### INDUSTRIAL APPLICABILITY

The invention provides a packing material capable of causing the contents to acquire no lingering odor, suppressing emission of an odor from the contents, preventing deterioration of the contents, due to an odor, and breaking seal with ease by tearing, excellent in mechanical strength and environmental conservation, and available at a low cost. Further, the packing material is useful since it can enclose liquid such as water, and so forth, which can be thereby commercialized, transported and stored with ease, and is suitable for holding the contents such as liquid and so forth.

Still further, the flexible container, and the method of forming the flexible container, according to the invention, are useful in that, for example, it is possible to provide the flexible container capable of causing the contents to acquire no lingering odor, suppressing emission of an odor from the contents, preventing deterioration of the contents, due to an odor, and breaking seal with ease by tearing, excellent in mechanical strength and environmental conservation, and available at a low cost.

Furthermore, the method of sealing a liquid into the flexible container, and the liquid sealed in the flexible container, according to the invention, are useful in that since the liquid as the contents of the flexible container acquire no lingering odor, and deterioration in quality of the liquid, due to an odor from environments, can be prevented, it is possible to commercialize a high quality liquid, and to provide a highly reliable liquid.

## Claims

1. A flexible container formed of a flexible material (2) made up of a laminated film having tearableness, the flexible container comprising:
a holding part for holding a liquid, formed of the flexible material (2) being the laminate or including the laminate, the laminate comprising; a heat seal layer (4) having heat seal property, provided on the inner side of the laminate; a protective layer (8) having a mechanical strength, provided on the outer side of the laminate; and a gas shut-out layer (6) having gas shut-out property, provided between the heat seal layer (4) and the protective layer (8);
seal parts (20, 32, 38) each bonding and sealing the heat seal layer (4) of the flexible material (2) by a necessary seal width to seal the holding part, the necessary seal width being set for obtaining a sufficient seal force; and
tear parts (34, 36) formed in one of the seal parts (32);
wherein the flexible material is made up of a single laminated film comprising: the heat seal layer (4) of polyethylene; the gas shut-out layer (6) of ethylene-vinyl alcohol resin; and the protective layer (8) of nylon or polyethylene terephthalate, and
wherein the seal parts (20, 32, 38) include a center seal part (20) for sealing the holding part at a center side of the holding part, a top seal part (32) for sealing the holding part at a top side of the holding part, and a bottom seal part (38) for sealing the holding part at a bottom side of the holding part,
the bottom seal part (38) seals the holding part sealed by the center seal part (20) and the top seal part (32), the holding part holding the liquid.

2. A flexible container according to claim 1, wherein the flexible material has a display face for printing (10), set on an inner side face of either the protective layer (8) or the gas shut-out layer (6), or of both thereof.

3. A flexible container according to claim 1, wherein either a single slit (34, 36) or a plurality of silts (34, 36) serving as the tear parts (34, 36) are formed on one corner side of the top seal part (32) to indicate a seal breaking spot, and the holding part is provided with a seal-breaking guide (50) for giving a guiding for a direction of tearing from the slits and also for reinforcing an opening of the holding part, formed by breaking seal.

4. A flexible container according to claim 3, wherein the seal-breaking guide (50) is made of a synthetic resin film.

5. A method of forming a flexible container formed of a flexible material (2) made up of a laminated film having tearableness, the method comprising the steps of:
forming a plurality of seal parts (20, 32, 38) by bonding portions of the flexible material (2) being the laminated film or including the laminated film, the laminate film comprising a heat seal layer (4) having heat seal property, provided on the inner side of the laminate film, a protective layer (8) having a mechanical strength, provided on the outer side of the laminate film, and a gas shut-out layer (6) having gas shut-out property, provided between the heat seal layer (4) and the protective layer (8); and
forming a holding part for holding the contents including a liquid, enclosed by the seal parts (20, 32, 38),
wherein the laminated film comprises the heat seal layer (4) of polyethylene, the gas shut-out layer (6) of ethylene-vinyl alcohol resin, and the protective layer (8) of nylon or polyethylene terephthalate;
wherein the steps of forming the plurality of the seal parts (20, 32, 38) and forming the holding part include the steps of forming a center seal part (20) for sealing the holding part at a center side of the holding part, forming a top seal part (32) for sealing the holding part at a top side of the holding part, and forming a bottom seal part (38) for sealing the holding part at a bottom side of the holding part sealed by the center seal part (20) and the top seal part (32), the holding part holding the liquid.

6. A method of enclosing a liquid in a flexible container formed of a flexible material (2) made up of a laminated film having tearableness, the method comprising the treatment steps of:
forming a plurality of seal parts (20, 32, 38) by bonding portions of the flexible material being a laminated film or including the laminated film, the laminated film comprising a heat seal layer (4) having heat seal property, provided on the inner side of the laminate film, a protective layer (8) having a mechanical strength, provided on the outer side of the laminate film, and a gas shut-out layer (8) having gas shut-out property, provided between the heat seal layer (4) and the protective layer (8);
forming a holding part after leaving out an opening in a part of the seal parts (20, 32, 38);
charging a predetermined amount of the liquid into the holding part; and
sealing the opening of the holding part after charging the liquid;
wherein the laminated film comprises the heat seal layer (4) of polyethylene, the gas shut-out layer (6) of ethylene-vinyl alcohol resin, and the protective layer (8) of nylon or polyethylene terephthalate, and
wherein the treatment steps of forming the plurality of the seal parts, (20, 32, 38) and forming the holding part include the treatment steps of forming a center seal part (20) for sealing the holding part at a center side of the holding part, forming a top seal part (32) for sealing the holding part at a top side of the holding part, and forming a bottom seal part (38) for sealing the holding part at a bottom side of the holding part sealed by the center seal part (20) and the top seal part (32), the holding part holding the liquid.

## Patentansprüche

1. Elastischer Behälter, der aus einem elastischen Material (2) gebildet ist, das aus einem laminierten Film besteht, der Zerreißbarkeit aufweist, wobei der elastische Behälter Folgendes umfasst:
einen Aufnahmeteil für das Aufnehmen einer Flüssigkeit, der aus dem elastischen Material (2) gebildet ist, welches das Laminat ist oder das Laminat umfasst, wobei das Laminat Folgendes umfasst:
eine Wärmeversiegelungsschicht (4) mit Wärmeversiegelungseigenschaft, die auf der Innenseite des Laminats bereitgestellt ist;
eine Schutzschicht (8) mit mechanischer Festigkeit, die auf der Außenseite des Laminats bereitgestellt ist;
und eine Gassperrschicht (6) mit Gas-sperrender Eigenschaft, die zwischen der Wärmeversiegelungsschicht (4) und der Schutzschicht (8) bereitgestellt ist;
Dichtungsteile (20, 32, 38), welche die Wärmeversiegelungsschicht (4) des elastischen Materials (2) durch eine erforderliche Dichtungsbreite jeweils haftschlüssig verbinden und abdichten, um den Aufnahmeteil abzudichten, wobei die erforderliche Dichtungsbreite für das Erzielen einer ausreichenden Dichtungskraft eingestellt ist; und
Aufreißteile (34, 36), die in einem der Dichtungsteile (32) ausgebildet sind;
worin das elastische Material aus einem Einzel-Laminatfilm gebildet ist, umfassend: die Wärmeversiegelungsschicht (4) aus Polyäthylen; die Gassperrschicht (6) aus Äthylen-Vinylalkohol-Harz; und die Schutzschicht (8) aus Nylon oder Polyäthylen-Terephthalat, und
worin die Dichtungsteile (20, 32, 38) einen mittleren Dichtungsteil (20) für das Abdichten des Aufnahmeteils an einer mittleren Seite des Aufnahmeteils, einen oberen Dichtungsteil (32) für das Abdichten des Aufnahmeteils an einer oberen Seite des Aufnahmeteils, und einen unteren Dichtungsteil (38) für das Abdichten des Aufnahmeteils an einer unteren Seite des Aufnahmeteils umfassen,
wobei der untere Dichtungsteil (38) den durch den mittleren Dichtungsteil (20) und den oberen Dichtungsteil (32) abgedichteten Aufnahmeteil abdichtet, und der Aufnahmeteil die Flüssigkeit aufnimmt.

2. Elastischer Behälter gemäß Anspruch 1, worin das elastische Material eine Anzeigefläche zum Bedrucken (10) aufweist, die auf einer Innenseitenfläche entweder der Schutzschicht (8) oder der Gassperrschicht (6) oder von beiden davon angelegt ist.

3. Elastischer Behälter gemäß Anspruch 1, worin entweder ein einzelner Schlitz (34, 36) oder eine Vielzahl von Schlitzen (34, 36), die als die Aufreißteile (34, 36) dienen, an einer Eckenseite des oberen Dichtungsteils (32) ausgebildet sind, um eine Verschlussöffnungsstelle anzuzeigen, und der Aufnahmeteil mit einem Verschlussöffnungsführungselement (50) bereitgestellt ist, um eine Führung für eine Aufreißrichtung von den Schlitzen weg zu geben und auch um eine durch die Verschlussöffnung ausgebildete Öffnung zu verstärken.

4. Elastischer Behälter gemäß Anspruch 3, worin das Verschlussöffnungsführungselement (50) aus einem Kunstharzfilm gebildet ist.

5. Verfahren zur Ausbildung eines elastischen Behälters, der aus einem elastischen Material (2) gebildet ist, das aus einem laminierten Film besteht, der Zerreißbarkeit aufweist, wobei das Verfahren folgende Schritte umfasst:
Ausbilden einer Vielzahl von Dichtungsteilen (20, 32, 38) durch haftschlüssiges Verbinden von Abschnitten des elastischen Materials (2), das der laminierte Film ist oder den laminierten Film umfasst, wobei der Laminatfilm eine Wärmeversiegelungsschicht (4) mit Wärmeversiegelungseigenschaft, die auf der Innenseite des Laminatfilms bereitgestellt ist, eine Schutzschicht (8) mit mechanischer Festigkeit, die auf der Außenseite des Laminatfilms bereitgestellt ist, und eine Gassperrschicht (6) mit Gas-sperrender Eigenschaft, die zwischen der Wärmeversiegelungsschicht (4) und der Schutzschicht (8) bereitgestellt ist, umfasst; und
Ausbilden eines durch die Dichtungsteile (20, 32, 38) eingeschlossenen Aufnahmeteils für das Aufnehmen des Inhalts, der eine Flüssigkeit umfasst, worin der Laminatfilm die Wärmeversiegelungsschicht (4) aus Polyäthylen, die Gassperrschicht (6) aus Äthylen-Vinylalkohol-Harz, und die Schutzschicht (8) aus Nylon oder Poyethylen-Terephthalat umfasst;
worin die Schritte zur Ausbildung der Vielzahl der Dichtungsteile (20, 32, 38) und zur Ausbildung des Aufnahmeteils die Schritte zur Ausbildung eines mittleren Dichtungsteils (20) zum Abdichten des Aufnahmeteils an einer mittleren Seite des Aufnahmeteils, zur Ausbildung eines oberen Dichtungsteils (32) zum Abdichten des Aufnahmeteils an einer oberen Seite des Aufnahmeteils, und zur Ausbildung eines unteren Dichtungsteils (38) zum Abdichten des Aufnahmeteils an einer unteren Seite des durch den mittleren Dichtungsteil (20) und den oberen Dichtungsteil (32) abgedichteten Aufnahmeteils, wobei der Aufnahmeteil die Flüssigkeit aufnimmt, umfassen.

6. Verfahren zum Einschließen einer Flüssigkeit in einem elastischen Behälter, der aus einem elastischen Material (2) gebildet ist, das aus einem Laminatfilm, der Zerreißbarkeit aufweist, besteht, wobei das Verfahren die Behandlungsschritte von Folgendem umfasst:
Ausbilden einer Vielzahl von Dichtungsteilen (20, 32, 38) durch haftschlüssiges Verbinden von Abschnitten des elastischen Materials, das ein Laminatfilm ist oder den Laminatfilm umfasst, wobei der Laminatfilm eine Wärmeversiegelungsschicht (4) mit Wärmeversiegelungseigenschaft, die auf der Innenseite des Laminatfilms bereitgestellt ist, eine Schutzschicht (8) mit mechanischer Festigkeit, die auf der Außenseite des Laminatfilms bereitgestellt ist, und eine Gassperrschicht (8) mit Gas-sperrender Eigenschaft, die zwischen der Wärmeversiegelungsschicht (4) und der Schutzschicht (8) bereitgestellt ist, umfasst;
Ausbilden eines Aufnahmeteils nach Aussparen einer Öffnung in einem Teil der Dichtungsteile (20, 32, 38);
Füllen einer vorbestimmten Flüssigkeitsmenge in den Aufnahmeteil; und Abdichten der Öffnung des Aufnahmeteils nach Einfüllen der Flüssigkeit;
worin der Laminatfilm die Wärmeversiegelungsschicht (4) aus Polyäthylen, die Gassperrschicht (6) aus Äthylen-Vinylalkohol-Harz, und die Schutzschicht (8) aus Nylon oder Polyethylen-Terephthalat umfasst, und
worin die Behandlungsschritte zur Ausbildung der Vielzahl von den Dichtungsteilen (20, 32, 38) und zur Ausbildung des Aufnahmeteils die Behandlungsschritte zur Ausbildung eines mittleren Dichtungsteils (20) für das Abdichten des Aufnahmeteils an einer mittleren Seite des Aufnahmeteils, zur Ausbildung eines oberen Dichtungsteils (32) für das Abdichten des Aufnahmeteils an einer oberen Seite des Aufnahmeteils, und zur Ausbildung eines unteren Dichtungsteils (38) für das Abdichten des Aufnahmeteils an einer unteren Seite des durch den mittleren Dichtungsteil (20) und den oberen Dichtungsteil (32) abgedichteten Aufnahmeteils, wobei der Aufnahmeteil die Flüssigkeit aufnimmt, umfassen.

## Revendications

1. Récipient souple formé d'un matériau souple (2) composé d'un film stratifié pouvant être déchiré, le récipient souple comprenant :
une partie de maintien permettant de contenir un liquide, formée du matériau souple (2) composé du stratifié ou comprenant le stratifié, le stratifié comprenant : une couche de thermoscellage (4) présentant une propriété de thermoscellage, disposée sur le côté interne du stratifié ; une couche de protection (8) présentant une résistance mécanique, disposée sur le côté externe du stratifié ; et une couche de coupure de gaz (6) présentant une propriété de coupure de gaz, disposée entre la couche de thermoscellage (4) et la couche de protection (8) ;
des parties d'étanchéité (20, 32, 38) dont chacune lie et assure l'étanchéité de la couche de thermoscellage (4) du matériau souple (2) par une largeur de joint d'étanchéité nécessaire pour assurer l'étanchéité de la partie de maintien, la largeur de joint d'étanchéité nécessaire étant définie pour obtenir une force d'étanchéité suffisante ; et
des parties de déchirure (34, 36) formées dans l'une des parties d'étanchéité (32) ;
dans lequel le matériau souple est composé d'un seul film stratifié comprenant : la couche de thermoscellage (4) de polyéthylène ; la couche de coupure de gaz (6) de résine d'éthylène alcool de vinyle ; et la couche de protection (8) de nylon ou de poly(téréphtalate d'éthylène), et
dans lequel les parties d'étanchéité (20, 32, 38) comprennent une partie d'étanchéité centrale (20) pour assurer l'étanchéité de la partie de maintien au niveau d'un côté central de la partie de maintien, une partie d'étanchéité supérieure (32) pour assurer l'étanchéité de la partie de maintien au niveau d'un côté supérieur de la partie de maintien, et une partie d'étanchéité inférieure (38) pour assurer l'étanchéité de la partie de maintien au niveau d'un côté inférieur de la partie de maintien,
la partie d'étanchéité inférieure (38) assure l'étanchéité de la partie de maintien dont l'étanchéité est assurée par la partie d'étanchéité centrale (20) et la partie d'étanchéité supérieure (32), la partie de maintien contenant le liquide.

2. Récipient souple selon la revendication 1, dans lequel le matériau souple présente une face d'affichage pour l'impression (10), définie sur une face de côté interne soit de la couche de protection (8), soit de la couche de coupure de gaz (6), ou les deux.

3. Récipient souple selon la revendication 1, dans lequel soit une seule fente (34, 36) soit une pluralité de fentes (34, 36) servant de parties de déchirure (34, 36) est/sont formée(s) sur un côté de coin de la partie d'étanchéité supérieure (32) pour indiquer un point de rupture d'étanchéité, et la partie de maintien est dotée d'un guide de rupture d'étanchéité (50) pour assurer un guidage pour une direction de déchirure depuis les fentes et également pour renforcer une ouverture de la partie de maintien, formée par rupture de l'étanchéité.

4. Récipient souple selon la revendication 3, dans lequel le guide de rupture d'étanchéité (50) est composé d'un film de résine synthétique.

5. Procédé de formation d'un récipient souple formé d'un matériau souple (2) composé d'un film stratifié pouvant être déchiré, le procédé comprenant les étapes suivantes :
la formation d'une pluralité de parties d'étanchéité (20, 32, 38) par liaison des parties du matériau souple (2) qui est composé du film stratifié ou qui comprend le film stratifié, le film stratifié comprenant une couche de thermoscellage (4) présentant une propriété de thermoscellage, disposée sur le côté interne du film stratifié, une couche de protection (8) présentant une résistance mécanique, disposée sur le côté externe du film stratifié, et une couche de coupure de gaz (6) présentant une propriété de coupure de gaz, disposée entre la couche de thermoscellage (4) et la couche de protection (8) ; et
la formation d'une partie de maintien pour contenir les contenus comprenant un liquide, enfermé par les parties d'étanchéité (20, 32, 38),
dans lequel le film stratifié comprend la couche de thermoscellage (4) de polyéthylène, la couche de coupure de gaz (6) de résine d'éthylène alcool de vinyle, et la couche de protection (8) de nylon ou de poly(téréphtalate d'éthylène) ;
dans lequel les étapes de formation de la pluralité de parties d'étanchéité (20, 32, 38) et de formation de la partie de maintien comprennent les étapes de formation d'une partie d'étanchéité centrale (20) pour assurer l'étanchéité de la partie de maintien au niveau d'un côté central de la partie de maintien, de formation d'une partie d'étanchéité supérieure (32) pour assurer l'étanchéité de la partie de maintien au niveau d'un côté supérieur de la partie de maintien, et de formation d'une partie d'étanchéité inférieure (38) pour assurer l'étanchéité de la partie de maintien au niveau d'un côté inférieur de la partie de maintien dont l'étanchéité est assurée par la partie d'étanchéité centrale (20) et la partie d'étanchéité supérieure (32), la partie de maintien contenant le liquide.

6. Procédé d'enfermement d'un liquide dans un récipient souple formé d'un matériau souple (2) composé d'un film stratifié pouvant être déchiré, le procédé comprenant les étapes suivantes :
la formation d'une pluralité de parties d'étanchéité (20, 32, 38) par liaison des parties du matériau souple (2) qui est composé du film stratifié ou qui comprend le film stratifié, le film stratifié comprenant une couche de thermoscellage (4) présentant une propriété de thermoscellage, disposée sur le côté interne du film stratifié, une couche de protection (8) présentant une résistance mécanique, disposée sur le côté externe du film stratifié, et une couche de coupure de gaz (8) présentant une propriété de coupure de gaz, disposée entre la couche de thermoscellage (4) et la couche de protection (8) ; et
la formation d'une partie de maintien après l'exclusion d'une ouverture dans une partie des parties d'étanchéité (20, 32, 38) ;
le chargement d'une quantité prédéterminée du liquide dans la partie de maintien ; et
l'étanchéification de l'ouverture de la partie de maintien après le chargement du liquide ;
dans lequel le film stratifié comprend la couche de thermoscellage (4) de polyéthylène, la couche de coupure de gaz (6) de résine d'éthylène alcool de vinyle, et la couche de protection (8) de nylon ou de poly(téréphtalate d'éthylène), et
dans lequel les étapes de traitement de formation de la pluralité des parties d'étanchéité (20, 32, 38) et de formation de la partie de maintien comprennent les étapes de traitement de formation d'une partie d'étanchéité centrale (20) pour assurer l'étanchéité de la partie de maintien au niveau d'un côté central de la partie de maintien, de formation d'une partie d'étanchéité supérieure (32) pour assurer l'étanchéité de la partie de maintien au niveau d'un côté supérieur de la partie de maintien, et de formation d'une partie d'étanchéité inférieure (38) pour assurer l'étanchéité de la partie de maintien au niveau d'un côté inférieur de la partie de maintien dont l'étanchéité est assurée par la partie d'étanchéité centrale (20) et la partie d'étanchéité supérieure (32), la partie de maintien contenant le liquide.
